# EUROPEAN PATENT APPLICATION

(11) **EP 4 653 126 A1**
(43) Date of publication of application: **26.11.2025**
(21) Application number: 25172924.0
(22) Date of filing: 28.04.2025
(51) Int. Cl.: B23K 26/146

(54) **LASER PROCESSING APPARATUS AND LASER PROCESSING METHOD**

(30) Priority: 17.05.2024 JP 2024080665
(71) Applicant: Sugino Machine Limited, Namerikawa City, Toyama 936-8577 (JP)
(72) Inventor: NAGAO, Takeru, Namerikawa City, Toyama 936-8577 (JP); SAWADA, Masato, Namerikawa City, Toyama 936-8577 (JP)
(74) Representative: Global IP Europe Patentanwaltskanzlei

(57) **Abstract**

Provided is a laser processing apparatus capable of stabilizing a liquid column and increasing a distance at which a laser is stably guided. The laser processing apparatus (10) includes a liquid supply chamber (16); a nozzle (17) including an ejection port (17b) facing to the liquid supply chamber (16), and a liquid column forming chamber (17c) connected to the ejection port (17b) for a liquid column (41) generated from the ejection port (17b) to pass through; an outlet pipe (21) through which the liquid column (41) passes, the outlet pipe (21) inserted into the liquid column forming chamber (17c); a liquid column discharge port (22) connected to the outlet pipe (21); a gas introduction channel (20) connected to an outer side of the outlet pipe (21) inside the liquid column forming chamber (17c); and an optical lens (14) which focuses a laser on the ejection port (17b) through the liquid supply chamber (16).

## Description

### BACKGROUND

### 1. Technical Field

The present invention relates to a laser processing apparatus and a laser processing method.

### 2. Description of the Background

An apparatus for generating a liquid jet for guiding a laser beam therein is known (e.g. Japanese Patent No. 5882927). The apparatus includes a fluid nozzle including a nozzle duct, an optical system for focusing on an inlet opening of the nozzle duct, a housing having a space, a gas inlet for supplying a gas to the space, and a gas discharge port nozzle having a gas discharge port for discharging a gas in the space. The gas discharge port is located downstream from the fluid nozzle.

### BRIEF SUMMARY

In the conventional laser processing apparatus, the liquid column may become unstable. Thus, there is a case where a distance in a processing head in which the laser is stably guided into the liquid column is shortened.

An object of the present invention is to provide a laser processing apparatus and a laser processing method capable of stabilizing a liquid column and increasing a distance at which a laser is stably guided.

A first aspect according to the present invention provides a laser processing apparatus, including:
a liquid supply chamber;
a nozzle including
   an ejection port facing the liquid supply chamber, and
   a liquid column forming chamber connected to the ejection port for a liquid column generated from the ejection port to pass through;
an outlet pipe through which the liquid column passes, the outlet pipe inserted into the liquid column forming chamber;
a liquid column discharge port connected to the outlet pipe;
a gas introduction channel connected to an outer side of the outlet pipe inside the liquid column forming chamber; and
an optical lens configured to focus a laser on the ejection port through the liquid supply chamber.

A second aspect according to the present invention provides a laser processing method, including:
discharging a liquid column, generated at an ejection port of a nozzle, from a liquid column discharge port;
focusing a laser on the ejection port;
flowing gas from a lower end of the nozzle toward the ejection port such that the gas swirls near the ejection port to flow along the liquid column while surrounding the liquid column to discharge the gas from the liquid column discharge port; and
processing a workpiece with the laser propagating inside the liquid column.

The laser processing apparatus may include a laser oscillator that oscillates a laser.

The gas introduction channel may be connected to radially outer side of the outlet pipe.

The connecting channel may extend radially about the ejection port.

The conical portion may be directly connected to the cylindrical portion. The conical portion is located near the ejection port of the cylindrical portion. The conical portion has a smaller diameter toward the ejection port. The conical portion may be a right conical shape.

The laser oscillator oscillates a laser. The optical lens may focus the laser at the ejection port.

The gas may flow from the edge of the liquid column forming chamber of the nozzle toward the ejection port, and the gas may swirl in the vicinity of the ejection port to discharge the gas from the liquid column discharge port through the outlet pipe.

The gas flows to surround the liquid column. The velocity of the gas is higher than the velocity of the liquid column surface. The gas flows around the liquid column even inside the outlet pipe or outside the laser head.

The recess may be located at a distal end portion of the laser head, and have a liquid column discharge port. The recess includes a bottom surface. The bottom surface may be a plane perpendicular to a central axis of the ejection port. The recess may have a larger diameter towards a distal end of the laser head. The recess may have a truncated conical shape.

The ejection port may form a liquid column from the recess of the laser head. The liquid column formed from the ejection port of the nozzle may be discharged from the liquid column discharge port located at the recess of the laser head.

According to the present invention, the liquid column is stabilized and the distance at which the laser is stably guided is increased.

### BRIEF DESCRIPTION OF DRAWINGS

FIG. 1 is a longitudinal sectional view of a laser processing apparatus according to an embodiment.
FIG. 2 is a cross-sectional view taken along line II-II in FIG. 1.
FIG. 3 is a cross-sectional view taken along line III-III in FIG. 1.
FIG. 4 is a longitudinal cross-sectional view of the laser processing apparatus in use.
FIG. 5 is a longitudinal cross-sectional view of the laser processing apparatus in use.
FIG. 6 is a longitudinal cross-sectional view of the laser processing apparatus in use.

### DETAILED DESCRIPTION

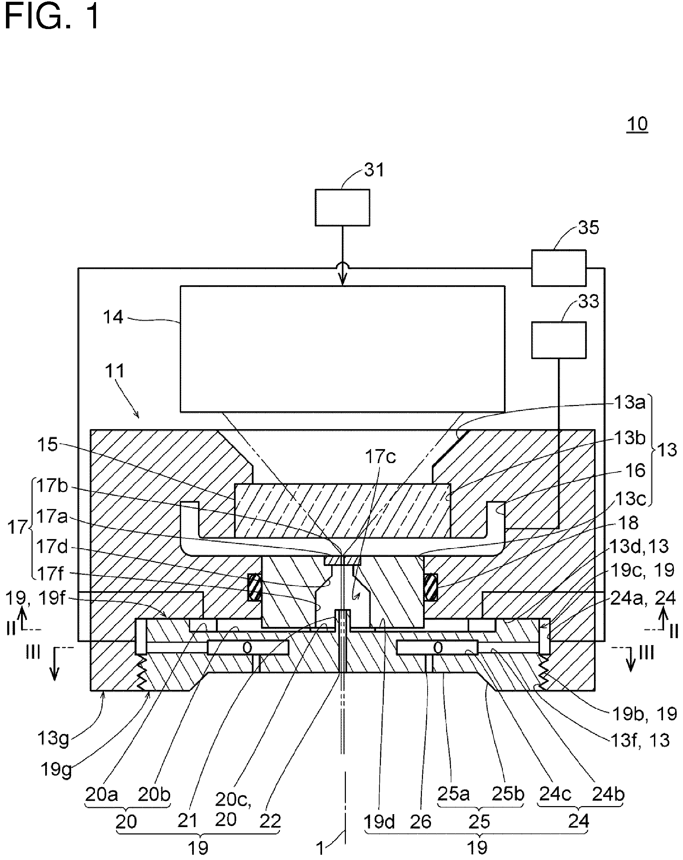

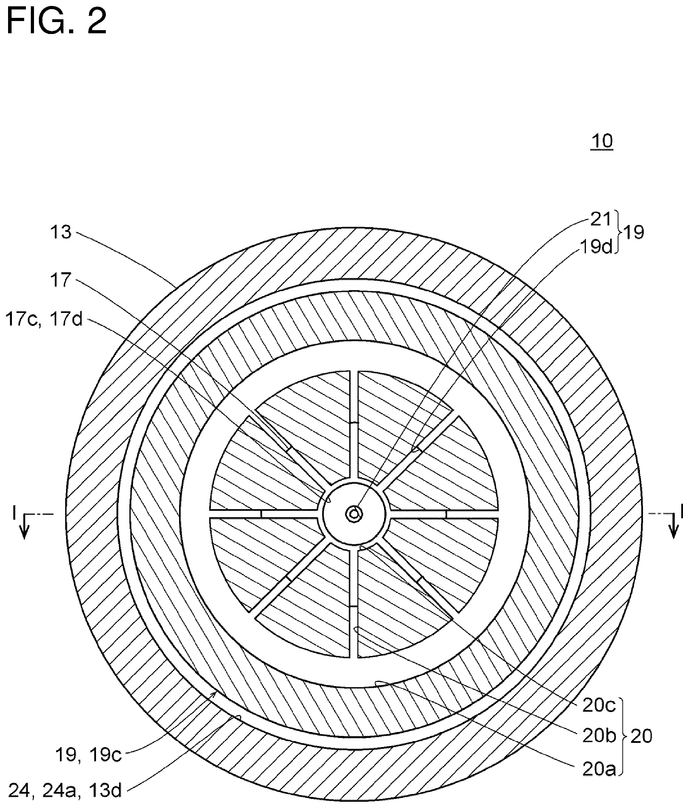

As shown in FIG. 1, a laser processing apparatus 10 according to the present embodiment includes a laser oscillator 31, a pump 33, a gas source 35, and a laser head 11. The laser head 11 includes a head body 13, an optical lens 14, a window 15, a nozzle 17, a packing 18, and a cap 19. FIG. 1 is a cross-sectional view taken along line I-I in FIG. 2. The laser head 11 includes a central axis 1 and a liquid column discharge port 22. With respect to the laser head 11, a side toward the liquid column discharge port 22 along the central axis 1 is defined as a distal end. A direction opposite to the distal end is referred to as a basal end.

The laser oscillator 31 oscillates a laser. The laser is preferably a pulsed laser.

The pump 33 is, for example, a piston pump. The pump 33 is a liquid pump. The pump 33 pressurizes the liquid to 10 MPa to several 10 MPa. The liquid is, for example, water. The gas source 35 is an air compressor or a gas cylinder. The gas source 35 supplies compressed air or helium gas to the laser head.

The laser oscillator 31, the pump 33, and the gas source 35 may be disposed outside the laser processing apparatus 10.

The head body 13 has a columnar shape. The head body 13 includes a laser channel 13a, a window chamber 13b, a liquid supply chamber 16, a nozzle chamber 13c, a cap chamber 13d, and an end surface 13g in this order from the basal end. The laser channel 13a, the window chamber 13b, the liquid supply chamber 16, the nozzle chamber 13c, and the cap chamber 13d are arranged along the central axis 1. The laser channel 13a is a truncated right conical. The window chamber 13b and the nozzle chamber 13c have a right cylindrical shape. The nozzle chamber 13c may have a packing groove (not shown). The liquid supply chamber 16, which has a U-shaped cross section, is a rotating body centered on the central axis 1. The cap chamber 13d, which has a right cylindrical shape, has an internal thread 13f. The internal thread 13f is located at a distal end portion of the cap chamber 13d.

The nozzle 17 is disposed in the nozzle chamber 13c. The nozzle 17 includes a nozzle tip 17a and a liquid column forming chamber 17c. The nozzle tip 17a is, for example, a jewel. Hereinafter, the jewel includes an artificial jewel and a sintered body of the artificial jewel. The nozzle tip 17a has an ejection port 17b. The ejection port 17b extends along the central axis 1. The liquid column forming chamber 17c is arranged along the central axis 1. The liquid column forming chamber 17c may include a cylindrical portion 17f and a conical portion 17d. The cylindrical portion 17f is located at a distal end portion of the nozzle 17. The cylindrical portion 17f is a right cylinder. The conical portion 17d is located in contact with the cylindrical portion 17f. The conical portion 17d is disposed at a basal end portion of the cylindrical portion 17f. The conical portion 17d may be a right conical shape. The conical portion 17d has a smaller diameter toward the ejection port 17b.

The cylindrical portion 17f may be omitted. In this case, the conical portion 17d extends to a distal end of the nozzle 17.

The packing 18 is disposed in the packing groove (not shown). The packing 18 seals a space between the head body 13 and the nozzle 17.

The window 15 is arranged in the window chamber 13b. The window 15 is a right cylinder. The window 15 is, for example, a jewel board. The laser passes through the window 15. The laser is focused on the ejection port 17b by optical lenses 14. The optical lens 14 may include a plurality of lenses.

The cap 19 is fastened to the cap chamber 13d. The cap 19 has a right cylindrical shape. The nozzle 17 is held by the cap 19. The cap 19 includes a first surface 19f, a second surface 19g, an outer cylindrical surface 19c, an external thread 19b, a nozzle chamber 19d, a first gas introduction channel 20, an outlet pipe 21, the liquid column discharge port 22, a second gas introduction channel 24, a recess 25, and a gas discharge port 26.

The first surface 19f and the second surface 19g are planar surfaces. The first surface 19f and the second surface 19g are end surfaces of the cap 19. The first surface 19f abuts the bottom surface of the cap chamber 13d. The second surface 19g is substantially on the same plane as the end surface 13g. Substantially the same planes include a plane having a distance of less than or equal to 0.5 mm.

The outer cylindrical surface 19c, which is a cylindrical surface, has a diameter smaller than that of the external thread 19b. The outer cylindrical surface 19c is located at a basal end of the side surface of the cap 19. There is a gap radially outward of the outer cylindrical surface 19c. The outer cylindrical surface 19c has a height of about 50% of the distance between the first surface 19f and the second surface 19g. The external thread 19b is located at a distal end portion of the cap 19. The external thread 19b fits into the internal thread 13f.

The recess 25 is located on the second surface 19g. The recess 25 has a truncated conical shape centered on the central axis 1. The recess 25 includes a bottom surface 25a and a side surface 25b. The bottom surface 25a is a plane perpendicular to the central axis 1. The side surface 25b is a right conical surface centered on the central axis 1. The side surface 25b has a smaller diameter toward the first surface 19f.

The nozzle chamber 19d is located to be open to the first surface 19f. The nozzle chamber 19d is a right cylinder centered on the central axis 1. The nozzle 17 has a distal end portion received in the nozzle chamber 19d. The bottom surface of the nozzle chamber 19d abuts against the bottom surface of the nozzle 17. The inner cylinder surface of the nozzle chamber 19d abuts against the outer cylindrical surface of the nozzle 17.

As shown in FIGs. 1 and 2, the first gas introduction channel 20 includes a first dispersing chamber 20a, a plurality of first connecting channels 20b, and a collecting chamber 20c. The first gas introduction channel 20 is located on the first surface 19f. The first gas introduction channel 20 may be open to the first surface 19f.

The first dispersing chamber 20a has a hollow-disk shape. The collecting chamber 20c has a hollow-disk shape. The collecting chamber 20c has an outer diameter smaller than an inner diameter of the first dispersing chamber 20a. The collecting chamber 20c is located radially inward from the first dispersing chamber 20a. A depth of the collecting chamber 20c from the first surface 19f may be the same as a depth of the first dispersing chamber 20a from the first surface 19f.

The first connecting channels 20b each connect the first dispersing chamber 20a and the collecting chamber 20c. The first connecting channel 20b extends radially from the collecting chamber 20c. The cross section of the first connecting channel 20b is, for example, rectangular. A depth of the first connecting channel 20b from the first surface 19f may be the same as a depth of the first dispersing chamber 20a from the first surface 19f. The first connecting channels 20b may be rotational symmetry about the central axis 1. As shown in FIG. 2, the first connecting channels 20b of the present embodiment are 8-fold rotational symmetry about the central axis 1.

The first connecting channel 20b may be disposed in the nozzle 17. In this case, the collecting chamber 20c may be integrated with the cylindrical portion 17f.

The outlet pipe 21 and the liquid column discharge port 22 are located on the central axis 1. The outlet pipe 21 is a hollow cylinder. The outlet pipe 21 extends from the upper surface of the collecting chamber 20c toward the nozzle 17. The outlet pipe 21 is disposed inside the liquid column forming chamber 17c. The outlet pipe 21 protrudes toward the basal end more than the basal edge of the collecting chamber 20c. The liquid column discharge port 22 is located on the bottom surface 25a. The liquid column discharge port 22, which is a cylindrical hole, communicates with the inner surface of the outlet pipe 21. An inner diameter of the liquid column discharge port 22 is the same as an inner diameter of the outlet pipe 21.

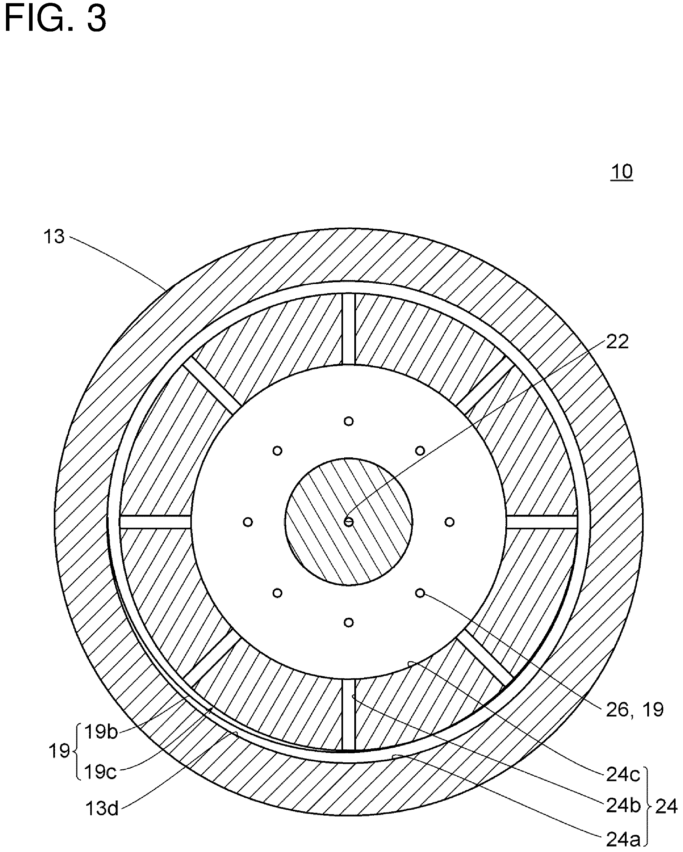

As shown in FIGs. 1 and 3, the second gas introduction channel 24 includes a second dispersing chamber 24a, a plurality of second connecting channels 24b, and a gas supply chamber 24c. The second gas introduction channel 24 is located on the distal end side of the first gas introduction channel 20. For example, the second dispersing chamber 24a is defined by the outer cylindrical surface 19c and the cap chamber 13d. The second dispersing chamber 24a has a thin cylindrical shape. The second dispersing chamber 24a is located radially outward from the first dispersing chamber 20a. The gas supply chamber 24c has a hollow-disk shape. The gas supply chamber 24c is located at the distal end side of the collecting chamber 20c. The second connecting channels 24b each connect the second dispersing chamber 24a and the gas supply chamber 24c. The second connecting channel 24b is disposed at the distal end of the first connecting channel 20b. The second connecting channel 24b extends, for example, on a straight line passing through the central axis 1. The second connecting channel 24b may be rotational symmetry (8-fold rotational symmetry in FIG. 3) about the central axis 1. As shown in FIG. 3, the second connecting channels 24b of the present embodiment are 8-fold rotational symmetry about the central axis 1.

As shown in FIG. 1, the plurality of gas discharge ports 26 penetrate from the gas supply chamber 24c toward the bottom surface 25a. The gas discharge port 26 extends parallel to the central axis 1. As shown in FIG. 3, the gas discharge port 26 is a cylindrical hole. The gas discharge port 26 may be a small diameter hole. The diameter of the gas discharge port 26 may be less than or equal to 1 mm. For example, the diameter of the gas discharge port 26 is 0.4 mm to 0.8 mm. The gas discharge ports 26 are arranged rotational symmetry (8-fold rotational symmetry in FIG. 3) about the central axis 1. As shown in FIG. 3, the gas discharge ports 26 of the present embodiment are 8-fold rotational symmetry about the central axis 1. The gas discharge port 26 may be disposed at a central portion in a radial length of the gas supply chamber 24c.

The gas discharge port 26 may extend to be inclined towards a circumferential direction of a circle centered on the central axis 1. In this case, the gas discharge port 26 and the central axis 1 are skey lines.

The second gas introduction channel 24 and the gas discharge port 26 may be omitted.

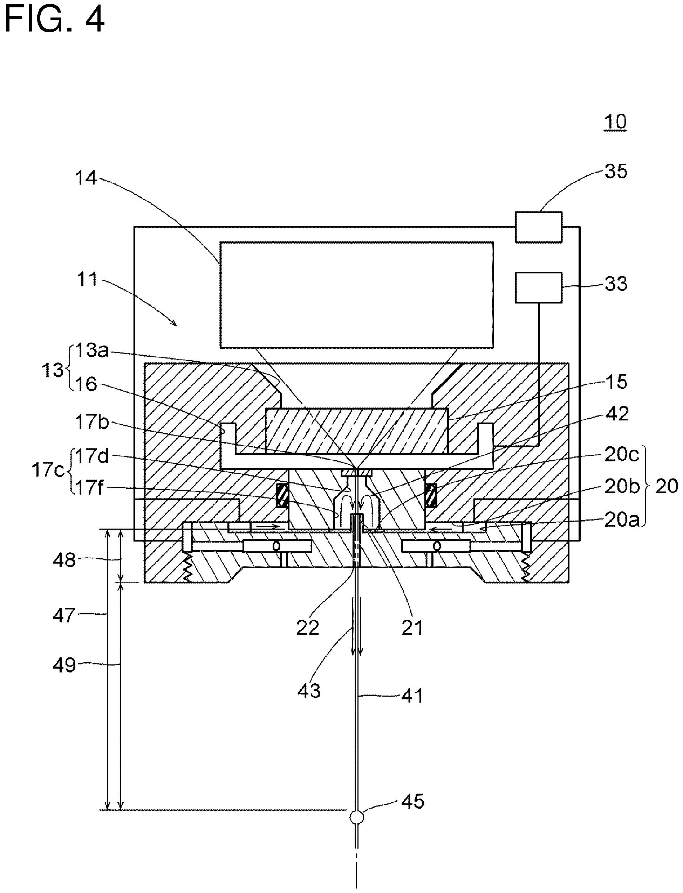

As shown in FIG. 4, when the pump 33 supplies the liquid to the laser head 11, a liquid column 41 is formed from the ejection port 17b through the liquid supply chamber 16. The liquid column 41 is discharged from the laser head 11 through the liquid column forming chamber 17c, the outlet pipe 21, and the liquid column discharge port 22. The laser oscillator 31 oscillates a laser. The optical lens 14 focuses the laser on the ejection port 17b through the window 15. The laser thus propagates inside the liquid column 41.

When the gas source 35 supplies the gas to the first gas introduction channel 20, the gas is evenly dispersed in the first dispersing chamber 20a. The gas flows substantially evenly from the plurality of first connecting channels 20b into the collecting chamber 20c. The gas flows from the collecting chamber 20c to the liquid column forming chamber 17c. The gas become a swirling flow 42 in the liquid column forming chamber 17c. The gas flows along the peripheral edge of the cylindrical portion 17f toward the ejection port 17b. The gas changes flow direction towards the central axis 1 in the conical portion 17d in the vicinity of the ejection port 17b. The gas then swirls from the vicinity of the ejection port 17b along the liquid column 41 toward the distal end, passes through the central portion of the liquid column forming chamber 17c, and enters the inside of the outlet pipe 21. The gas is ejected from the liquid column discharge port 22.

From the vicinity of the ejection port 17b of the liquid column forming chamber 17c, the gas flows so as to surround the outer periphery of the liquid column 41. The liquid column 41 is surrounded by the swirling flow 42 of gas and flows inside the liquid column forming chamber 17c together with the gas flow. In a section from the basal end of the outlet pipe 21 to the liquid column discharge port 22, the gas flows so as to surround the liquid column 41. The gas flow 43 ejected from the liquid column discharge port 22 flows together with the liquid column 41 so as to surround the liquid column 41. The swirling flow 42 and the gas flow 43 flow at a higher speed than the liquid column 41. The gas has a lower viscosity than the liquid. The gas flows around the liquid column 41, which increases the rate of gas flowing around the surface of the liquid column 41. The swirling flow 42 and the gas flow 43 thus reduce the vorticity at the interface between the surface of the liquid column 41 and the gas. The swirling flow 42 and the gas flow 43 promote the straightening of the liquid column 41.

The outlet pipe 21 extends along the central axis 1 inside the liquid column forming chamber 17c. The collecting chamber 20c is connected below the liquid column forming chamber 17c. The gas thus flows from the peripheral edge portion of the liquid column forming chamber 17c toward the ejection port 17b, swirls in the vicinity of the ejection port 17b, and flows along the liquid column 41. The swirling flow 42 is generated inside the liquid column forming chamber 17c, so that a tubular flow of gas is formed around the liquid column 41 discharged from the ejection port 17b. This suppresses an inclination of the liquid column 41 and disturbance of the flow of the liquid column 41 in the liquid column forming chamber 17c. The liquid column forming chamber 17c includes the cylindrical portion 17f disposed at the distal end portion and the conical portion 17d disposed at the basal end portion. This promotes the formation of the swirling flow 42.

The flow of the liquid column 41 begins to disturb as it moves away from the nozzle 17. At a position 45 at which the outer surface of the liquid column 41 is disturbed, the laser leaks from the liquid column 41 to the outside. The laser processing apparatus 10 allows to effectively cut a portion between the end surface 13g and the position 45. The distance from the end surface 13g to the position 45 is defined as an effective cutting length 49. In the present embodiment, the first gas introduction channel 20 is disposed near the distal end surface of the nozzle 17. The length of the first gas introduction channel 20 in the direction of the central axis 1 is short. The second gas introduction channel 24 is formed in a thin disk shape. A distance 48 from the front end surface of the nozzle 17 to the end surface 13g is thus short. This increases the effective cutting length 49.

The liquid column discharge port 22 has the same inner diameter as the outlet pipe 21. The vorticity of the gas flow and the liquid column 41 is thus suppressed between the inlet (basal end) of the outlet pipe 21 and the liquid column discharge port 22. This suppresses the disturbance of the liquid column 41, and increases the effective cutting length 49. This further suppresses an attenuation of the laser in the liquid column 41. This improves a processing capability of the laser processing apparatus 10.

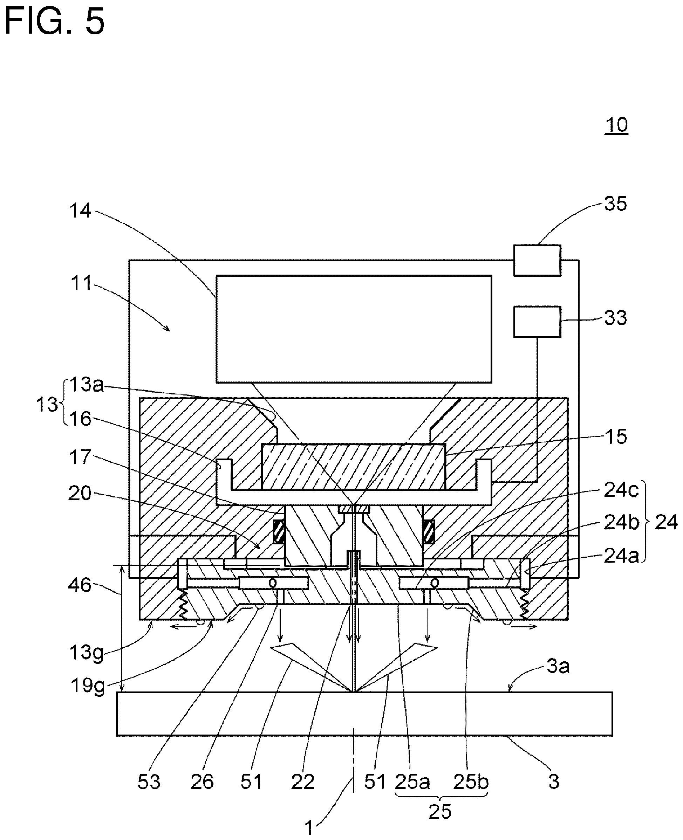

The energy of the laser propagating in the liquid column tends to decrease as the distance 47 from the nozzle 17 increases. It is thus preferable to bring the nozzle 17 and the workpiece 3 as close as possible. As the distance 48 in the laser head 11 is short, a distance 46 (see FIG. 5) between the workpiece 3 and the nozzle 17 can be shortened.

As shown in FIG. 5, the workpiece 3 is processed by the laser processing apparatus 10 according to the present embodiment. The workpiece 3 has a surface 3a. When the liquid column 41 collides with the workpiece 3, the liquid column 41 splashes from the surface 3a and the splashed liquid 51 splashes. The splashed liquid 51 adheres to the distal end surface of the laser head 11 as a droplet 53.

According to the conventional art, the droplet 53 may be sucked into the liquid column discharge port 22. When the droplet 53 adheres to the liquid column discharge port 22, the liquid column 41 is easily disturbed. When the liquid column 41 is disturbed, the energy of the laser propagating into the liquid column 41 tends to decrease. In addition, in some cases, dross generated during processing adheres to the distal end surface of the laser head 11 together with the droplet 53. When the dross is sucked into the liquid column discharge port 22 together with the droplet 53, the liquid column discharge port 22 may be clogged by the dross.

The laser processing apparatus 10 according to the present embodiment includes the gas discharge port 26. As the gas discharge port 26 has a small diameter, the total cross-sectional area of the gas discharge ports 26 can be reduced. This decreases the flow rate of the gas ejected from the gas discharge port 26. Further, even if the flow rate of the gas is decreased, a flow velocity of the gas ejected from the gas discharge port 26 is increased. As the flow rate of the gas is small, the effect of the gas ejected from the gas discharge port 26 on the liquid column 41 is small. This reduces the disturbance of the liquid column 41 caused by the gas ejected from the gas discharge port 26. The splashed liquid 51 is divided by the gas ejected from the gas discharge port 26, which promotes scattering. This reduces the splashed liquid 51 to adhere to the distal end surface of the laser head 11. Increasing the flow rate of the gas suppresses the splashed liquid 51 to adhere.

The laser processing apparatus 10 according to the present embodiment has the recess 25. The recess 25 has the bottom surface 25a. The gas discharge port 26 is located on the bottom surface 25a. By ejecting the gas from the gas discharge port 26, the droplet 53 adhering to the bottom surface 25a moves toward the outer periphery. Most of the droplets 53 are discharged from the side surface 25b through the second surface 19g and the end surface 13g. As the side surface 25b is inclined outward, it promotes the droplet 53 to be ejected. The second surface 19g and the end surface 13g are substantially on the same plane to promote ejection of the droplet 53. This reduces the adverse effect of the adhesion of the splashed liquid 51 to the laser head 11. This further suppresses the clogging of the liquid column discharge port 22 due to dross.

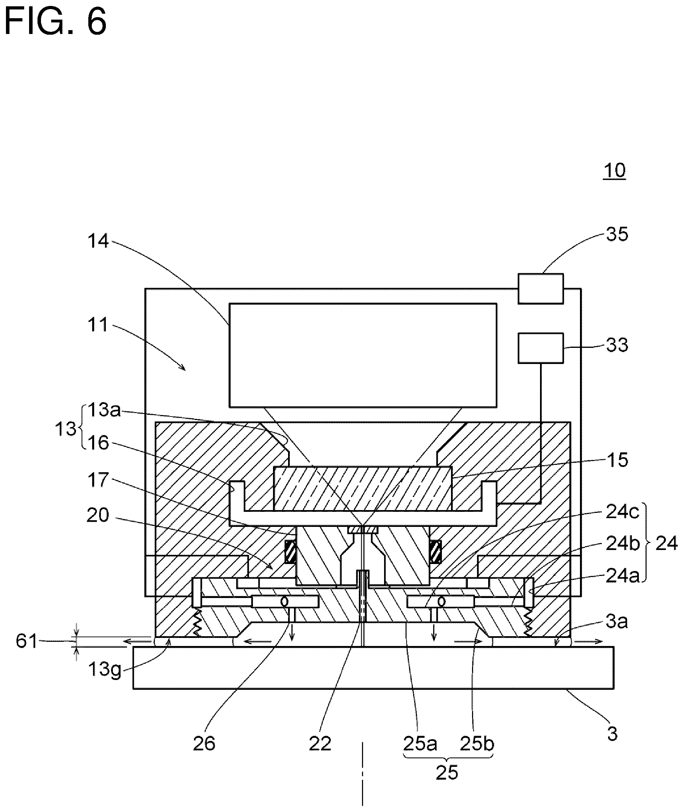

The liquid has a viscosity and a surface tension. As shown in FIG. 6, when the distance 61 between the laser head 11 and the workpiece 3 is decreased, a liquid pool tends to be formed between the laser head 11 and the workpiece 3. According to the conventional art, the space between the laser head 11 and the surface 3a of the workpiece 3 may be filled with a liquid. In this case, the processing capability is significantly reduced as the laser cannot be efficiently irradiated to the processing point.

The laser head 11 according to the present embodiment has the recess 25. The gas discharge port 26 is located in the recess 25. The gas is ejected from the gas discharge port 26. The ejected gas promotes the liquid to be discharged from between the laser head 11 and the surface 3a toward radially outward. This easily fill the space between the recess 25 and the workpiece 3 with gas. The liquid column 41 thus reaches the surface 3a to promote the processing of the workpiece 3.

Note that the gas flow channel (for example, the second gas introduction channel 24 or the gas discharge port 26) to the recess 25 may be replaced with a conventional technique (for example, the second pipe line (a second conduit) in EP 31054043).

The present invention is not limited to the above-described embodiments, and various modifications can be made without departing from the gist of the present invention, and all technical matters included in the technical idea described in the claims are the subject of the present invention. While the above embodiments have been shown by way of example, those skilled in the art will recognize that various alternatives, modifications, variations, and improvements can be made from the disclosure herein, which fall within the scope of the appended claims.

### Reference Signs List

- 10: Laser processing apparatus
- 11: Laser head
- 14: Optical lens
- 16: Liquid supply chamber
- 17: Nozzle
- 17b: Ejection port
- 17c: Liquid column forming chamber
- 20: First gas introduction channel (gas introduction channel)
- 21: Outlet pipe
- 22: Liquid column discharge port
- 31: Laser oscillator

## Claims

1. A laser processing apparatus (10), comprising:
a liquid supply chamber (16);
a nozzle (17) including
an ejection port (17b) facing the liquid supply chamber (16), and
a liquid column forming chamber (17c) connected to the ejection port (17b) for a liquid column (41) generated from the ejection port (17b) to pass through;
an outlet pipe (21) through which the liquid column (41) passes, the outlet pipe (21) inserted into the liquid column forming chamber (17c);
a liquid column discharge port (22) connected to the outlet pipe (21);
a gas introduction channel (20) connected to an outer side of the outlet pipe (21) inside the liquid column forming chamber (17c); and
an optical lens (14) configured to focus a laser on the ejection port (17b) through the liquid supply chamber (16).

2. The laser processing apparatus (10) according to claim 1, further comprising:
a laser oscillator (31) configured to generate the laser.

3. The laser processing apparatus (10) according to claim 1 or 2, wherein
the liquid column discharge port (22) has a same inner diameter as the outlet pipe (21).

4. The laser processing apparatus (10) according to any one of claims 1 to 3, wherein
the gas introduction channel (20) includes
a dispersing chamber (20a) having an annular shape, the dispersing chamber (20a) located radially outward from the nozzle (17),
a collecting chamber (20c) having an annular shape, the collecting chamber (20c) connected to the liquid column forming chamber (17c), and
a plurality of connecting channels (20b) each connecting the dispersing chamber (20a) and the collecting chamber (20c).

5. The laser processing apparatus (10) according to claim 4, wherein
the plurality of the connecting channels (20b) are arranged in a rotationally symmetric manner about a central axis (1) of the ejection port (17b).

6. The laser processing apparatus (10) according to claim 4 or 5, wherein
the connecting channel (20b) extends along a line passing through a central axis (1) of the ejection port (17b).

7. The laser processing apparatus (10) according to any one of claims 4 to 6, wherein
the liquid column forming chamber (17c) includes a cylindrical portion (17f) centered on a central axis (1) of the ejection port (17b), and
the connecting channel (20b) is connected to the cylindrical portion (17f).

8. The laser processing apparatus (10) according to claim 7, wherein
the liquid column forming chamber (17c) includes a conical portion (17d) located closer to the ejection port (17b) than the cylindrical portion (17f), the conical portion (17d) connected to the cylindrical portion (17f).

9. The laser processing apparatus (10) according to any one of claims 4 to 6, wherein
the liquid column forming chamber (17c) has a conical shape centered on a central axis (1) of the ejection port (17b) and having a smaller cross section towards the ejection port (17b), and
the liquid forming chamber (17c) is connected to the collecting chamber (20c).

10. The laser processing apparatus (10) according to any one of claims 1 to 9, further comprising:
a cap (19) having the liquid column discharge port (22), the cap (19) having a recess (25) at a distal end.

11. A laser processing method, comprising:
discharging a liquid column (41), generated at an ejection port (17b) of a nozzle (17), from a liquid column discharge port (22);
focusing a laser on the ejection port (17b);
flowing gas from a lower end of the nozzle (17) toward the ejection port (17b) such that the gas swirls near the ejection port (17b) to flow along the liquid column (41) while surrounding the liquid column (41) to discharge the gas from the liquid column discharge port (22); and
processing a workpiece (3) with a laser propagating inside the liquid column (41).

12. The laser processing method according to claim 11, wherein
the liquid column (41) is discharged from the liquid column discharge port (22) through an outlet pipe (21), and
the gas is discharged from the liquid column discharge port (22) through an outlet pipe (21).

13. The laser processing method according to claim 11 or 12, wherein
the gas is supplied to an annular shaped gas dispersing chamber (20a), and
the gas is evenly supplied from the gas dispersing chamber (20a) to a distal end portion of a liquid column forming chamber (17c) through a plurality of connecting channels (20b).
